## Europäisches Patentamt

## European Patent Office

## Office européen des brevets

(19)

(11) Veröffentlichungsnummer: **0 082 412**
**B1**

(12) # EUROPÄISCHE PATENTSCHRIFT

(45) Veröffentlichungstag der Patentschrift:
**02.04.86**

(21) Anmeldenummer: **82111365.1**

(22) Anmeldetag: **08.12.82**

(51) Int. Cl.⁴: **F 16 K 11/06,** F 16 K 3/34,
F 16 K 31/52, F 15 B 13/02

(54) **Verstellbares Doppeldrosselventil.**

(30) Priorität: **23.12.81 DE 3150940**

(43) Veröffentlichungstag der Anmeldung:
**29.06.83 Patentblatt 83/26**

(45) Bekanntmachung des Hinweises auf die Patenterteilung:
**02.04.86 Patentblatt 86/14**

(84) Benannte Vertragsstaaten:
**DE FR GB IT**

(56) Entgegenhaltungen:
FR - A - 1 218 111
GB - A - 726 336
US - A - 2 471 289
US - A - 2 912 994
US - A - 3 049 149

"Stromventile, Theorie und Aufbau", K. Kasperbauer,
Krausskopf-Verlag, D-Mainz, 1972, Seite 54
"Der Hydraulik-Trainer", A. Schmitt, Vogel-Verlag,
D-8700 Würzburg, 1980, Seite 135

(73) Patentinhaber: **ROBERT BOSCH GMBH, Postfach 50,
D-7000 Stuttgart 1 (DE)**

(72) Erfinder: **Steprath, Werner, Ing. grad., Bergheimer
Strasse 42, D-4047 Dormagen 11 (DE)**

## Beschreibung

### Stand der Technik

Die Erfindung geht aus von einem verstellbaren Doppeldrosselventil nach der Gattung des Hauptanspruchs. Es ist schon ein solches Doppeldrosselventil aus der US-A-2 471 289 bekannt, dessen dreh- und längsbewegliches, als Kolbenschieber ausgebildetes Steuerglied die Verbindung zwischen vier Motoranschlüssen sowie einem Zulauf- und einem Rücklaufanschluss steuert. Mit diesem Doppeldrosselventil können zwei doppeltwirkende Hydromotoren in beiden Richtungen parallel gesteuert werden, während durch Drehen des Steuerschiebers der vorauseilende Motor zur Erzielung eines Gleichlaufs relativ zum anderen Motor gebremst werden kann. Von Nachteil bei diesem Doppeldrosselventil ist, dass es als 6-Wegeventil zur Gleichlaufsteuerung zweier Zylinder ausgebildet ist und dementsprechend aufwendig baut; zudem eignet es sich nicht zur Drucksteuerung in hydraulischen Steuerkreisen. Vor allem aber ist das Doppeldrosselventil nicht so ausgebildet, dass es sich durch andere Montage eines Bauelements für unterschiedliche Arbeitsweisen eignet. Auch ist eine echte gegenläufige Steuerung zweier Widerstände insofern nicht möglich, da deren Verhältnis nur so veränderbar ist, dass ein Widerstand verstellt und der andere dabei konstant bleibt. Bei diesem Ventil sind die Durchflusskennlinien über dem Hub abhängig von der Drehlage des Steuerglieds verschieden steil.

Ferner ist ein solches Doppeldrosselventil aus der GB-A-1 374 756 bekannt, bei dem die beiden Einzelwiderstände als Laminar-Drosseln ausgebildet sind. Dabei wird der zwischen den beiden Einzelwiderständen liegende Steueranschluss von einem Kolbenabschnitt eines Steuerglieds übersteuert, der an seinem Aussenumfang mit einem Gewinde versehen ist. Eine solche Bauart hat einmal den Nachteil, dass das Doppeldrosselventil empfindlich ist gegenüber Temperaturänderungen und Schmutzeinflüssen. Ferner muss das Steuerglied infolge der Laminar-Drosseln einen grossen Hub ausführen, wodurch das Doppeldrosselventil aufwendig und gross baut. Ferner ist von Nachteil, dass das Steuerglied nur gegenüber dem Zulaufdruck druckausgeglichen ist, nicht aber gegenüber dem Druck im Rücklaufanschluss, so dass axiale Kräfte auf das Steuerglied wirken können.

Weiterhin kann das Steuerglied nur Axialbewegungen ausführen, so dass mit dem Doppeldrosselventil keine zusätzlichen Funktionen steuerbar sind.

Weiterhin ist aus der DE-B-2 751 449 eine Vorrichtung zur Lage- und Arbeitstiefenregelung für ein an einen Ackerschlepper angekoppeltes Anbaugerät bekannt, bei dem zur vollhydraulischen Signalverarbeitung Doppeldroselventile als Geber für Sollwerte und Istwerte sowie als Mischventile verwendet werden. Nachteilig hierbei ist, dass die Doppeldrosselventile als Düsen-Prallplatten-Ventile aufgebaut sind, die relativ ungünstige Formen von Steuerquerschnitten ergeben. Zudem sind diese Doppeldrosselventile kaum zur Steuerung zusätzlicher Funktionen geeignet.

### Vorteile der Erfindung

Das erfindungsgemässe Doppeldrosselventil mit den kennzeichnenden Merkmalen des Hauptanspruchs hat demgegenüber den Vorteil, dass es an verschiedene Verwendungsfälle besonders leicht anpassbar ist, indem durch andere Montage des Steuerglieds im Gehäuse aus einem gegenläufigen Doppeldrosselventil ein gleichläufig arbeitendes Ventil erreichbar ist. Dies lässt sich zudem bei besonders einfacher, kompakter und robuster Bauweise ermöglichen, wobei mit dem Steuerglied durch Längsbewegung eine schaltende Funktion und damit die Simulation extremer Werte möglich ist, wie dies z.B. für einen Schnellaushub oder ein Senken eines an einem Schlepper angelenkten Pfluges notwendig ist. Es eignet sich daher vorteilhaft zur Drucksteuerung in hydraulischen Steuerkreisen, insbesondere zur Verwendung als hydraulischer Geber, als Verteiler oder als Mischer. Die Verwendung der Drehbewegung zur Drucksteuerung erlaubt eine feinfühlige Arbeitsweise, die unbeeinflusst ist vom Spiel in der Betätigungseinrichtung.

Weitere besonders vorteilhafte Ausgestaltungen ergeben sich aus den Unteransprüchen, die vor allem seine einfache Bauweise und seine vielseitige Anwendung begünstigen. Eine Bauart nach Anspruch 4 lässt sich besonders zweckmässig als Extremwertgeber verwenden.

### Zeichnung

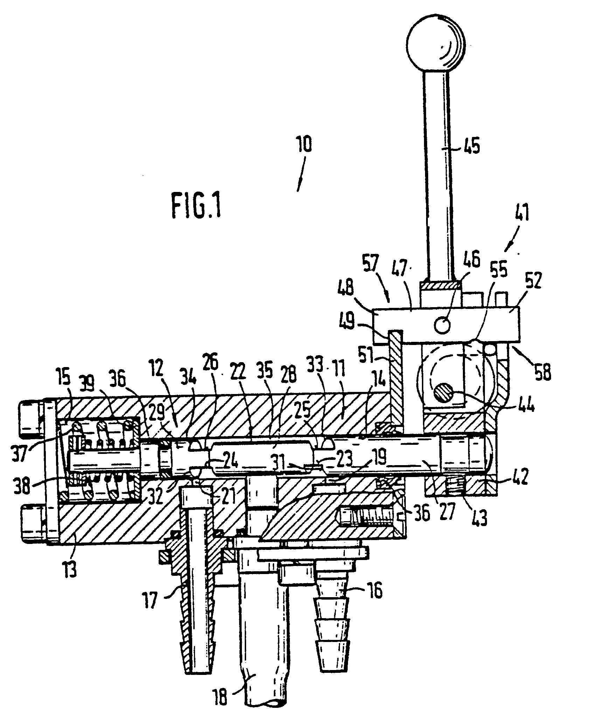

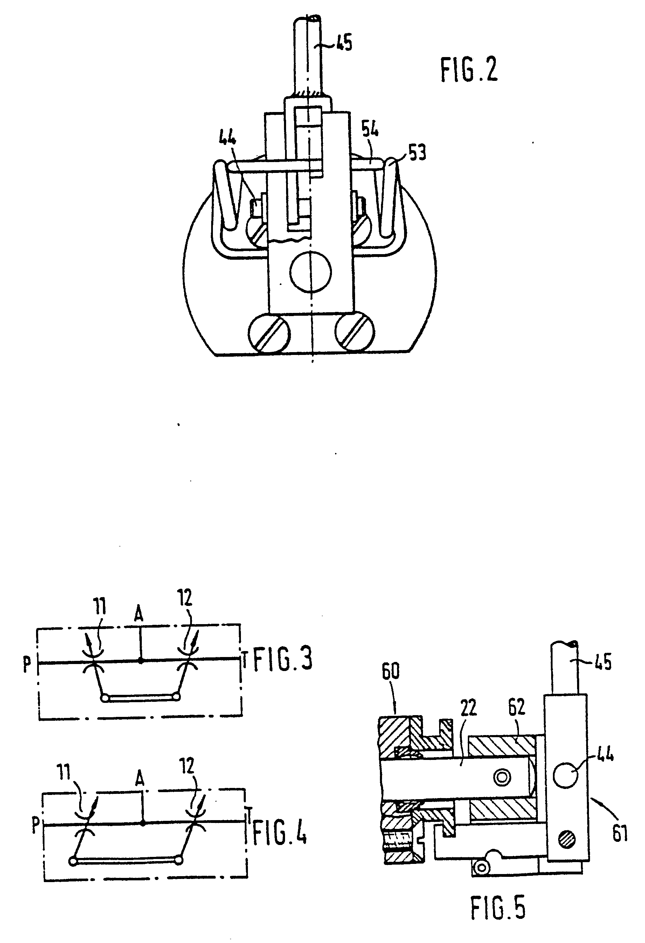

Ausführungsbeispiele der Erfindung sind in der Zeichnung dargestellt und in der nachfolgenden Beschreibung näher erläutert. Es zeigen Fig. 1 einen Längsschnitt durch ein erstes Doppeldrosselventil, Fig. 2 eine Seitenansicht des Ventils nach Fig. 1, Fig. 3 ein Schaltschema für das gegenläufig arbeitende Doppeldrosselventil nach Fig. 1, Fig. 4 ein Schaltschema für ein gleichläufiges Doppeldrosselventil und Fig. 5 einen Längsschnitt durch einen Teil eines zweiten Doppeldrosselventils mit einer anderen Betätigungsvorrichtung.

### Beschreibung der Ausführungsbeispiele

Die Fig. 1 zeigt ein Doppeldrosselventi 10, dessen beide hydraulische Einzelwiderstände 11 und 12 miteinander gekoppelt sind. Das Doppeldrosselventil 10 weist in einem Gehäuse 13 eine durchgehende Längsbohrung 14 auf, die an einem stirnseitigen Ende des Gehäuses 13 zu einem Federraum 15 erweitert ist. Im Gehäuse 13 sind in derselben Ebene und auf der gleichen Seite ein Zulaufanschluss 16, ein Ablaufanschluss 17 sowie ein dazwischen liegender Steueranschluss 18 angeordnet. Im Gegenstand zum Steueranschluss 18 sind der Zulauf- und der Ablaufanschluss 16, 17 jeweils über eine Steueröffnung 19, 21 mit der Längsbohrung 14 verbunden. Die Steueröffnungen 19, 21 sind hierbei als kleine Bohrungen ausgebildet, deren Durchmesser wesentlich kleiner ist als der Durchmesser der Längsbohrung 14.

In der Längsbohrung 14 ist ein Steuerglied 22 dicht und gleitend geführt. Im Steuerglied 22 sind schräg zu seiner Längsachse vier Nuten 23 bis 26 angeordnet, welche das Steuerglied in einen äusseren (27) einen mittleren (28) sowie einen inneren Kolbenabschnitt (29) teilen. Ein Rand der ersten Nut 23 bildet dabei am äusseren Kolbenabschnitt 27 eine erste Steuerkante 31, die der ersten Steueröffnung 19 für den Zulaufanschluss zugeordnet ist. In entsprechender Weise bildet die zweite Nut 24 am inneren Kolbenabschnitt 29 eine zweite Steuerkante 32, welche der Steueröffnung 21 am Ablaufanschluss 17 zugeordnet ist. Der Abstand zwischen den Steuerkanten 31 und 32 entspricht dem Abstand der Steueröffnungen 19, 21. Die Tiefe der Nuten 23 und 24 ist so gewählt, dass die auf der gleichen Umfangshälfte des Steuerglieds 22 liegenden Steuerkanten 31 und 32 sich nicht über den gesamten, halben Umfang erstrecken. Die Schräge der Nuten und damit der Steuerkanten 31, 32 ist so gewählt, dass die Steueröffnungen 19, 21 voll auf- und zusteuerbar sind. Ferner sind die Nuten 23, 24 gleich schräg angeordnet, so dass die Steuerkanten 31, 32 zueinander parallel verlaufen. Durch diese Ausbildung und Lage der Steuerkanten 31, 32 relativ zu den Steueröffnungen 19, 21 sind somit die Einzelwiderstände 11, 12 in der gezeichneten Ausgangsstellung des Steuerglieds 22 jeweils zur Hälfte auf- oder zugesteuert. Auf der den Nuten 23, 24 gegenüberliegenden Umfangshälfte des Steuerglieds 22 bilden die Nuten 25 und 26 in entsprechender Weise, eine dritte (33) sowie vierte Steuerkante (34). Während die dritte Nut (25) den gleichen Windungssinn wie die erste und zweite Nut 23, 24 aufweist, ist die vierte Nut 26 mit gegenläufigem Windungssinn ausgebildet, so dass die Steuerkanten 33, 34 nicht mehr parallel zueinander, sondern gegenläufig zueinander liegen. Im übrigen ist jedoch der Abstand dieser Steuerkanten 33, 34 sowie die Tiefe der Nuten 25, 26 wieder gleich wie bei den entsprechenden Teilen auf der unteren Umfangshälfte. Der mittlere Kolbenabschnitt 28 weist einen kleineren Aussendurchmesser auf als der Durchmesser der Längsbohrung 14, wodurch die Steuerkanten 31 bis 34 einen Raum 35 begrenzen, der mit dem Steueranschluss 18 verbunden ist. Am äusseren (27) sowie am inneren Kolbenabschnitt (29) angeordnete Dichtungen 36 sorgen für eine gute Abdichtung des Raumes 35 nach aussen hin. Im Federraum 15 sind zwei Federn 37, 38 konzentrisch zueinander angeordnet und stützen sich an einem gemeinsamen Federteller 39 ab, so dass das Steuerglied 22 im Gehäuse 13 spielfrei in seiner Ausgangsstellung zentriert ist.

An dem aus dem Gehäuse 13 ragenden, äusseren Kolbenabschnitt 27 greift eine Betätigungsvorrichtung 41 an. Letztere (41) weist einen Lagerblock 42 auf, der mit Hilfe einer Madenschraube 43 mit dem Steuerglied 22 fest verbunden ist. Auf dem Lagerblock 42 ist ein Bedienhebel 45 mit Hilfe einer Achse 44 so schwenkbar gelagert, dass er nur in einer Ebene durch die Längsachse des Steuerglieds 22 hin- und herbewegbar ist. Die Achse 44 liegt hierbei in einigem, radialen Abstand vom Steuerglied 22. In der gleichen radialen Ebene wie die Achse 44 sitzt am Bedienhebel 45 ein Bolzen 46, mit dem ein Bremshebel 47 schwenkbar am Bedienhebel 45 gelagert ist. Der Bremshebel 47 ist zweiarmig ausgebildet und weist an seinem zum Gehäuse 13 hin ragenden Arm 48 eine Nut 49 auf, in der eine am Gehäuse 13 befestigte Kulisse 51 gleitet. Am anderen Arm 52 des Bremshebels 47 liegt eine Rastfeder 53 an, so dass der eine Arm 48 stets gegen die Kulisse 51 gedrückt wird. Die Rastfeder 53 weist einen horizontalen Bügel 54 auf, dem eine Rastnut 55 am Bremshebel 47 zugeordnet ist. Die Rastfeder 53 stützt sich ihrerseits mit einem unteren Bügel am Lagerblock 42 ab. Der obere Bügel 54 an der Rastfeder 53 ist durch den Lagerblock 42 und durch ein an letzterem befestigtes Führungsblech 56 in seiner axialen Richtung festgelegt. Der Bedienhebel 45 kann somit in und gegen den Uhrzeigersinn — bezogen auf Fig. 2 — um die Längsachse des Steuerglieds 22 gedreht werden, wobei der Bremshebel 47 in Verbindung mit der Kulisse 51 für eine gleichbleibende axiale Lage des Steuerglieds 22 sorgt. Der von der Rastfeder 53 belastete Bremshebel 47 bildet zugleich einen Teil einer Bremseinrichtung 57, welche den Bedienhebel in der jeweils eingestellten Drehlage festhält. Darüber hinaus sind der Bremshebel 47 mit seiner Rastnut 55 und der Rastfeder 53 Teile einer Rasteinrichtung 58, die bei einem Ausschwenken des Hebels 45 im Uhrzeigersinn um den Bolzen 46 wirksam wird. Durch die Lagerung des Bedienhebels 45 radial zum äusseren Kolbenabschnitt 27 wird eine besonders kurz bauende Betätigungsvorrichtung 41 erreicht.

Die Fig. 3 zeigt in vereinfachter Darstellung das Schaltschema des Drosselventils 10 nach Fig. 1, wobei die beiden Einzelwiderstände 11 und 12 gegenläufig arbeiten, da die erste Steuerkante 31 und die zweite Steuerkante 32 in der in Fig. 1 dargestellten Lage des Steuerglieds 22 mit den Steueröffnungen 19 und 21 in Wirkverbindung stehen. Soll aus einem gegenläufigen Doppeldrosselventil 10 nach Fig. 1 bzw. Fig. 3 ein gleichläufiges Doppeldrosselventil gemacht werden, so wird das Steuerglied 22 um 180 Grad um seine Längsachse gedreht in das Gehäuse 13 eingebaut und durch die Madenschraube 43 im Lagerblock 42 befestigt. Dann steht die dritte Steuerkante 33 mit der Steueröffnung 19 und die vierte Steuerkante 34 mit der Steueröffnung 21 in Wirkverbindung, so dass die in Fig. 4 im Schaltschema veranschaulichte, gleichläufige Arbeitsweise des Doppeldrosselventils erreicht wird, wobei beide Einzelwiderstände 11 und 12 in gleicher Grösse und im gleichen Sinne auf bzw. zugesteuert werden.

Die Wirkungsweise des Doppeldrosselventils 10 wird wie folgt erläutert: In der gezeichneten Ausgangsstellung des Bedienhebels 45 sind die beiden Steueröffnungen 19 und 21 von den zugehörigen Steuerkanten 31 und 32 jeweils zur Hälfte zugesteuert. Das in den Zulaufanschluss 16 geleitete Steueröl fliesst über den ersten Einzelwiderstand 12 in den Raum 35 und weiter über den zweiten Einzelwiderstand 12 zum Ablaufanschluss 17. Der im Raum 35 zwischen den beiden Einzelwiderständen 11, 12 angedrosselte Druck steht im Steueranschluss 18 zum Abgriff für Steuerzwecke bereit. Dabei ist das Steuerglied 22 in der in Fig. 1 gezeichneten Ausgangsstellung durch die Federn 37, 38 spielfrei im Gehäuse 13 zentriert. Zudem wird der Bremshebel 47 durch die Kraft der Rastfeder 53 gegen die Kulisse 51 gedrückt, wodurch die Bremseinrichtung 57 ein selbsttätiges Verdrehen des Bedienhebels 45 in einer Ebene senkrecht zur Längsachse des Steuerglieds 22 verhindert bzw. einen merklichen Widerstand entgegensetzt. Soll nun der als Sollwert dienende Druck im Steueranschluss 18 verändert werden, so wird der Bedienhebel 45 — bezogen auf die Fig. 2 — in der Darstellungsebene im oder gegen den Uhrzeigersinn verschwenkt. Dabei wird bei einem Verschwenken im Uhrzeigersinn die erste Steueröffnung 19 verstärkt geöffnet, während gleichzeitig die zweite Steueröffnung 21 in entsprechend umgekehrtem Masse zugesteuert wird. Bei diesem Verdrehen des Hebels 45 um die Längsachse des Steuergliedes 27 gleitet der Bremshebel 48 mit seiner Nut 49 über den Aussenumfang der Kulisse 51. Die Bremseinrichtung 57 kann daher in jeder Drehlage des Bedienhebels 45 wirksam sein, auch wenn der Bedienhebel 45 maximal um ca. 70 bis 80 Grad aus seiner Ausgangslage heraus verdreht wird, wobei dann die erste Steueröffnung 19 voll aufgesteuert und die zweite Steueröffnung 21 voll zugesteuert ist. Während beim Drehen des Bedienhebels 45 in Fig. 2 im Uhrzeigersinn der Druck im Steueranschluss 18 erhöht wird, kann in entsprechend umgekehrter Weise durch Schwenken des Bedienhebels 45 entgegen dem Uhrzeigersinn der Druck im Steueranschluss 18 gesenkt werden. Hierbei wird der erste Widerstand 11 zugesteuert und der zweite Widerstand 12 entsprechend aufgesteuert.

Neben dieser Steuerung des als Sollwert dienenden Drucks im Steueranschluss 18 durch die beschriebene Drehbewegung des Bedienhebels 45 um die Längsachse des Steuerglieds 22 kann das Drosselventil 10 zusätzlich zur Steuerung weiterer Funktionen verwendet werden. Zu diesem Zweck ist der Bedienhebel 45 — bezogen auf Fig. 1 — um den Bolzen 46 nach beiden Richtungen hin schwenkbar, um derart das Steuerglied 22 aus der gezeichneten Ausgangsstellung heraus nach beiden Richtungen hin axial auslenken zu können. Wird der Bedienhebel 45 in Bezug zum Bolzen 46 im Uhrzeigersinn voll ausgelenkt, so rastet die Feder 53 mit ihrem oberen Bügel 54 in die Rastnut 55 ein. Die Rasteinrichtung 58 hält das Steuerglied 22 gegen die Rückstellkraft der Feder 37 in seiner ausgelenkten Stellung, wobei der erste Einzelwiderstand 11 zu- und der zweite Widerstand 12 aufgesteuert ist. Das Ausrasten geschieht von Hand mit Hilfe des Bedienhebels 45. Fernerhin kann der Bedienhebel 45 in Fig. 1 entgegen dem Uhrzeigersinn ausgelenkt werden, wobei das Steuerglied 22 gegen die Rückstellkraft der Feder 38 ausgelenkt wird und hierbei den ersten Einzelwiderstand 11 voll aufsteuert, während der zweite Einzelwiderstand 12 voll zugesteuert wird. Auf diese Weise können mit dem Drosselventil 10 Extremwerte simuliert werden, wie dies z.B. in einer vollhydraulischen Steuereinrichtung für einen Ackerschlepper mit angelenktem Pflug zur Verwirklichung der Funktionen Schnellaushub und Senken notwendig ist. Dabei kann diese Extremwertsimulation unabhängig von der jeweiligen Drehlage des Bedienhebels 45 durchgeführt werden.

Die Fig. 5 zeigt einen Teil eines zweiten Doppeldrosselventils 60, das sich von demjenigen nach Fig. 1 vor allem durch eine andere Betätigungseinrichtung 61 mit einem anderen Lagerblock 62 unterscheidet. Im übrigen sind funktionsmässig entsprechende Teile mit gleichen Bezugszeichen versehen. Der Lagerblock 62 ist so ausgebildet, dass die Achse 44 nun in Verlängerung des Steuerglieds 22 liegt. Auf diese Weise baut die Betätigungseinrichtung 61 in der Längsrichtung etwas grösser, aber im Durchmesser etwas kleiner, da die Kulisse 51 und der Bremshebel 47 näher am Steuerglied 22 liegen.

Selbstverständlich sind Änderungen an den gezeigten Ausführungsformen möglich, ohne vom Gedanken der Erfindung abzuweichen. So kann das Drosselventil 10 auch ohne Betätigungseinrichtung 41 als Geber für Istwerte und Sollwerte verwendet werden. Ebenso kann das Drosselventil 10 auch als Mischventil verwendet werden, wenn Steuerdruckmittel über den Steueranschluss 18 zufliesst und über die Anschlüsse 16 und 17 abströmt; die Durchströmung kann auch in umgekehrter Weise erfolgen. Anstelle der gezeigten Anordnung von gleichläufigen und von gegenläufigen Steuerkanten kann das Steuerglied auch mit einem einzigen dieser Steuerkantenpaare ausgebildet werden. Selbstverständlich kann das als Zweikanten-Ventil ausgebildete Doppeldrosselventil 10 auch als Einkanten-Ventil verwendet werden, wenn einer der Anschlüsse 16 bzw. 17 blockiert wird. Auch ist es möglich, bei Bedarf eine Rasteinrichtung für beide Stellungen vorzusehen, in denen Extremwerte simuliert werden. Die Bauart des Doppeldrosselventils 10 in Verbindung mit der Betätigungseinrichtung 41 stellt eine besonders vorteilhafte Kombination dar.

**Patentansprüche**

1. Verstellbares Dopppeldrosselventil (10) mit zwei miteinander gekoppelten, hydraulischen Einzelwiderständen (11, 12), die aus einem Gehäuse (13) und einem in dessen Längsbohrung (14) beweglich angeordneten Steuerglied (22) bestehen, das die Verbindungen zwischen einem Anschluss (16) und einem Steueranschluss (18) sowie zwischen letzterem und einem anderen Anschluss (17) steuert, wozu das Steuerglied (22) im Gehäuse (13) verdrehbar sowie in seiner Längsrichtung verschiebbar geführt ist, dadurch gekennzeichnet, dass der Steueranschluss (18) zwischen den den beiden Anschlüssen (16, 17) zugeordneten Steueröffnungen (19, 21) in die Längsbohrung (14) führt, dass am Umfang des Steuerglieds (22) auf der einen Hälfte der Umfangsfläche eine erste und eine zweite, schräg verlaufende Steuerkante (31, 32) ausgebildet sind und die andere Hälfte der Umfangsfläche eine dritte und eine vierte, schräg verlaufende Steuerkante (33, 34) aufweist, dass jeweils zwei Steuerkanten (31, 33 bzw. 32, 34) einer der Steueröffnungen (19, 21) zugeordnet sind, dass die vier Steuerkanten (31 bis 34) zwischen sich einen Raum (35) begrenzen, der mit dem Steueranschluss (18) in Verbindung steht und jede der Steuerkanten (31 bis 34) sich maximal über die halbe Umfangsfläche am Steuerglied (22) erstreckt, dass eine (34) der vier Steuerkanten (31 bis 34) einen gegenüber den anderen (31, 32, 33) entgegengesetzten Windungssinn aufweist und dass der Abstand zwischen der dritten und vierten Steuerkante (33, 34) in Ausgangsstellung, in der beide Steueröffnungen (19, 21) in gleichem Masse übersteuert sind, demjenigen zwischen der ersten und zweiten Steuerkante (31, 32) und damit dem Abstand der zugeordneten Steueröffnungen (19, 21) gleicht.

2. Doppeldrosselventil nach Anspruch 1, dadurch gekennzeichnet, dass die den beiden Anschlüssen (16, 17) und dem Steueranschluss (18) zugeordneten Öffnungen (19, 21, 18) in der Längsbohrung (14) in der gleichen, durch die Längsachse des Steuerglieds (22) verlaufenden Ebene und auf derselben Seite bezüglich der Längsachse liegen.

3. Drosselventil nach einem der Ansprüche 1 und 2 mit einer Betätigungsvorrichtung (41), mit der das Steuerglied (22) in seiner Ausgangsstellung im und gegen den Uhrzeigersinn um seine Längsachse drehbar und aus jeder Drehlage heraus in axialer Richtung nach beiden Richtungen hin verstellbar ist, dadurch gekennzeichnet, dass die Betätigungsvorrichtung (41) eine der Drehbewegung zugeordnete Bremseinrichtung (57) aufweist.

4. Drosselventil nach einem der Ansprüche 1 bis 3, dadurch gekennzeichnet, dass dem Steuerglied (22) eine in einer axialen Endstellung haltende Rasteinrichtung (58) zugeordnet ist.

5. Drosselventil nach einem der Ansprüche 3 und 4, dadurch gekennzeichnet, dass am Steuerglied (22) drehfest ein Lagerblock (42) der Betätigungsvorrichtung (41) befestigt ist, in dem ein Bedienhebel (45) in Längsrichtung des Steuerglieds (22) schwenkbar gelagert ist, dass am Bedienhebel (45) in radialem Abstand vom Schwenkpunkt (44) ein Bremshebel (47) ebenfalls schwenkbar (46) angelenkt ist, der von der Kraft einer Rastfeder (53) belastet in eine am Gehäuse (13) befestigte Kulisse (51) greift und dort axial unverschiebbar, aber in einer radialen Ebene schwenkbar geführt ist.

6. Drosselventil nach Anspruch 5, dadurch gekennzeichnet, dass der Schwenkpunkt (44) in radialem Abstand vom Steuerglied (22) liegt (Fig. 1).

7. Drosselventil nach Anspruch 5, dadurch gekennzeichnet, das der Schwenkpunkt (44) in einer gedachten Verlängerung des Steuerglieds (22) liegt (Fig. 5).

8. Drosselventil nach einem der Ansprüche 1 bis 7, gekennzeichnet durch seine Verwendung als Sollwert- und Extremwert-Geber in einer hydraulischen Hubwerkssteuerung bei einem landwirtschaftlichen Arbeitsfahrzeug.

**Claims**

1. Adjustable double throttle valve (1) with two mutually coupled, individual hydraulic resistances (11, 12), which consist of a casing (13) and a control element (21) movably located in the longitudinal bore (14) of the casing, which control element controls the interconnection between a connection (16) and a control connection (18) and between the latter and another connection (17), for which purpose the control element (11) is guided in the casing (13) so that it can be both rotated and, in its longitudinal direction, displaced, characterised in that the control connection (18) between the control opening (19, 21) corresponding to the two connections (16, 17) leads into the longitudinal bore (14), that a first and a second obliquely running control edge (31, 32) are formed at the periphery of the control element (22) on one half of the peripheral surface and the other half of the peripheral surface has a third and a fourth obliquely running control edge (33, 34), that two control edges (31, 33 or 32, 34) are allocated to each of the control openings (19, 21), that the four control edges (31 to 34) limit between them a space (35) which is connected to the control connection (18) and each of the control edges (31 to 34) extends as a maximum over the half peripheral surface of the control element (22), that one (34) of the four control edges (31 to 34) has an opposite hand winding relative to the others (31, 32, 33) and that the distance between the third and fourth control edges (33, 34) in the initial position, in which the two control openings (19, 21) are shut off to the same extent, is equal to that between the first and second control edges (31, 32) and therefore to the distance apart of the corresponding control opening (19, 21).

2. Double throttle valve according to Claim 1, characterised in that the openings (19, 21, 18), in the longitudinal bore (14), associated with the two connections (16, 17) and the control connection (18) are located in the same plane passing through the longitudinal axis of the control element (22) and on the same side relative to the longitudinal axis.

3. Throttle valve according to one of the Claims 1 and 2 with an actuating device (41), by means of which the control element (22), in its initial position, can be rotated in the clockwise and anti-clockwise directions about its longitudinal axis and can be adjusted from any rotational position in the axial direction in both directions, characterised in that the actuating device (41) has a braking device (57) associated with the rotational movement.

4. Throttle valve according to one of Claims 1 to 3, characterised in that an engagement device (58) is associated with the control element (22) and restrains it in an axial end position.

5. Throttle valve according to one of Claims 3 and 4, characterised in that a bearing block (42) of the actuating device (41) is connected to the control element (22) so as to prevent relative rotation between them, in which bearing block an operating lever (45) is pivotably supported in the longitudinal direction of the control element (22), that a braking lever (47) is also pivotably (46) linked to the operating lever (45) at a radial distance from the pivoting point (44), which braking lever, loaded by the force of an engagement spring (53), engages in a gate (51) fastened to the casing (13) and is there guided so that it cannot be displaced axially but can be pivoted in a radial plane.

6. Throttle valve according to Claim 5, characterised in that the pivoting point (44) is located at a radial distance from the control element (22) (Fig. 1).

7. Throttle valve according to Claim 5, characterised in that the pivoting point (44) is located in an imaginary extension of the control element (22) (Fig. 5).

8. Throttle valve according to one of Claims 1 to 7, characterised by its use as a desired value and extreme value signal generator in a hydraulic lifting gear control in an agricultural vehicle.

## Revendications

1. Vanne réglable à double étranglement (1), comportant deux résistances hydrauliques distinctes (11, 12) couplées l'une à l'autre et constituées d'un carter (13) et d'une pièce de commande (22) qui est disposée, mobile, dans l'alésage longitudinal (14) de ce carter et qui commande les liaisons entre un raccord (16) et un raccord de commande (18) ainsi qu'entre celui-ci et un autre raccord (17), ce pour quoi la pièce de commande (22) est guidée dans le carter (13) aussi bien en rotation qu'en coulissement selon sa direction longitudinale, caractérisée en ce que le raccord de commande (18) débouche dans l'alésage longitudinal (14) entre les ouvertures de commande (19, 21) correspondant aux deux raccords (16, 17); en ce qu'à la périphérie de la pièce de commande (22) sont prévues, sur l'une des moitiés de la surface périphérique, une première et une seconde arête de commande courant obliquement (31, 32) et en ce que l'autre moitié de la surface périphérique présente une troisième et une quatrième arête de commande courant obliquement (33, 34); en ce que chaque fois deux arêtes de commande (31, 33 et 32, 34) correspondent à l'une des ouvertures de commande (19, 21), en ce que les quatre arêtes de commande (31 à 34) limitent entre elles une chambre (35) qui est en liaison avec le raccord de commande (18) et en ce que chacune des arêtes de commande (31 à 34) s'étend au maximum sur la demi surface périphérique de la pièce de commande (22); en ce que l'une (34) des quatre arêtes de commande (31 à 34) présente un sens d'hélice opposée, par rapport aux autres (31, 32, 33); et en ce que la distance entre la troisième et la quatrième arête de commande (33, 34), en position de départ dans laquelle les deux ouvertures de commande (19, 21) sont obturées de la même valeur, est égale à la distance entre la première et la seconde arête de commande (31, 32) et donc à la distance des ouvertures de commande correspondantes (19, 21).

2. Vanne à double étranglement selon le revendication 1, caractérisée en ce que les ouvertures (19, 21, 18) dans l'alésage longitudinal (14) correspondant aux deux raccords (16, 17) et au raccord de commande (18) sont dans le même plan passant par l'axe longitudinal de la pièce de commande (22) et du même côté de cet axe longitudinal.

3. Vanne à étranglement selon l'une des revendications 1 et 2, comportant un dispositif de manoeuvre (41) qui permet de déplacer la pièce de commande (22), se trouvant dans sa position de départ, par rotation autour de son axe longitudinal, sens horaire et sens anti-horaire, et, à partir de toute position angulaire, en direction axiale dans les deux sens, caractérisée en ce que le dispositif de manoeuvre (41) présente un dispositif de freinage (57) correspondant au mouvement de rotation.

4. Vanne à étranglement selon l'une des revendications 1 à 3, caractérisée en ce qu'à la pièce de commande (22) correspond un dispositif de crantage (58) qui la maintient dans une position axiale extrême.

5. Vanne à étranglement selon l'une des revendications 3 et 4, caractérisée en ce qu'à la pièce de commande (22) est fixé, sans possibilité de rotation relative, un bloc (42) du dispositif de manoeuvre (41) dans lequel peut pivoter, en direction longitudinale de la pièce de commande (22), un levier de manoeuvre (45); en ce qu'au levier de manoeuvre (45), à une certaine distance radiale du point de pivotement (44), est articulé, avec également possibilité de pivotement (46), un levier de freinage (47) que sollicite la force d'un ressort de crantage (53), sur lequel agit un coulisseau (51) fixé au carter (13) qui le guide, sans possibilité de coulissement axial, mais avec possibilité de pivotement dans un plan radial.

6. Vanne à étranglement selon la revendication 5, caractérisée en ce que le point de pivotement (44) est à une certaine distance radiale de la pièce de commande (22) (fig. 1).

7. Vanne à étranglement selon la revendication 5, caractérisée en ce que le point de pivotement (44) se trouve sur le prolongement imaginaire de la pièce de commande (22) (fig. 5).

8. Vanne à étranglement selon l'une des revendications 1 à 7, caractérisée par son utilisation comme émetteur de valeur de consigne et de valeur extrême dans une commande hydraulique de relevage d'un véhicule pour le travail agricole.

FIG.1

FIG.2

FIG.3

FIG.4

FIG.5